# EUROPEAN PATENT SPECIFICATION

(11) **EP 0 601 226 B1**
(45) Date of publication and mention of the grant of the patent: **18.03.1998**
(21) Application number: 92120859.1
(22) Date of filing: 07.12.1992
(51) Int. Cl.: C08L 69/00, C08L 67/02, C08K 3/22

(54) **Flame retarded polyester resin composition**
Flammhemmende Polyesterharzzusammensetzung
Composition de résine polyester à combustion retardée

(43) Date of publication of application: 15.06.1994
(73) Proprietor: Kanegafuchi Chemical Industry Co., Ltd., Kita-ku Osaka 530 (JP)
(72) Inventor: Fujita, Katsutoyo, Kobe, Hyogo (JP); Miyama, Osamu, Settsu, Osaka (JP); Matsumoto, Shigemi, Akashi Hyogo (JP); Tonoki, Satoshi, Suita, Osaka (JP)
(74) Representative: Strehl Schübel-Hopf Groening & Partner

(56) References cited:
- WO-A-92/14787
- US-A- 4 629 760
- DATABASE WPI Week 9136, Derwent Publications Ltd., London, GB; AN 91-262338
- PATENT ABSTRACTS OF JAPAN vol. 13, no. 190 (C-593)1989
- PATENT ABSTRACTS OF JAPAN vol. 7, no. 201 (C-184)1983

## Description

### BACKGROUND OF THE INVENTION

The present invention relates to a resin composition which is suited for the manufacture of automotive parts, electrical and electronic parts, general articles, etc., said resin composition being excellent in moldability and providing moldings having remarkably high flame retardance, heat distortion resistance, impact resistance, resistance to chemicals and weather resistance.

Polycarbonate resin is known as a plastic material having the highest impact resistance of all engineering plastics as well as satisfactory heat distortion resistance and is in broad use in a variety of applications where these characteristics are much valued. However, this resin has some drawbacks, namely poor chemical resistance, poor moldability, and thickness dependence of impact strength.

On the other hand, thermoplastic polyester resin is excellent in chemical resistance and moldability but poor in impact resistance and dimensional stability.

To make the most of the desirable characteristics and make up for the drawbacks of these respective resins, a variety of resin compositions have heretofore been disclosed in the literature including Japanese Patent Publication Nos. 36-14035, 39-20434, 55-9435, 62-37671, 62-34792 and 62-13378, and Japanese Kokai Patent Publication Nos. 62-29595, 63-83158, and 64-16859, among others.

Thus, Japanese Patent Publication No. 36-14035 discloses a thermoplastic material comprising a 4,4'-dioxydiarylalkane polycarbonate and polyethylene terephthalate. J.P. Publication No. 39-20434 describes a resin composition comprising a 4,4'-dioxydiarylalkane polycarbonate, a polyolefin and a saturated polyester. J.P. Publication No. 55-9435 discloses a thermoplastic resin composition comprising an aromatic polyester, an aromatic polycarbonate and a butadiene graft copolymer. Described in J.P. Publication No. 62-37671 is a thermoplastic resin composition comprising a saturated polyester resin, a polycarbonate resin and a polyacrylate rubber-containing polymer as main components. J.P. Publication No. 62-34792 discloses a polycarbonate resin composition comprising a polycarbonate resin, a saturated polyester resin, a polyolefin resin and an acrylate rubber-containing vinyl polymer. J.P. Publication No. 62-13378 describes a polycarbonate resin composition comprising a polycarbonate resin, a saturated polyester resin, a polyolefin and an acrylate-methacrylate resin. Japanese Kokai Patent Publication No. 62-295951 proposes a polycarbonate resin composition comprising a polycarbonate resin, an aromatic polyester resin and an acrylate-butadiene graft copolymer. Japanese Kokai Patent Publication No. 63-83158 describes a resin composition comprising an aromatic polycarbonate, a thermoplastic polyester, a thermoplastic graft copolymer and a polyolefin.

Futhermore, Japanese Kokai Patent Publication No. 64-16859 relates to a flame retardant polyester composition comprising a polyester, a halogenated polycarbonate oligomer, a halogenated phenoxy resin and an antimony compound.

However, none of these resin compositions are capable of providing all the characteristics required of automotive, electrical/electronic and other parts, namely sufficient impact resistance, heat distortion resistance, chemical resistance, weather resistance, rigidity and elongation at break, and, therefore, further improvements have been awaited in earnest.

Furthermore, in some applications such as automotive interior parts or electrical and electronic parts, flame retardance is required from safety consideration. However, since addition of a flame retardant sacrifices impact resistance, heat distortion resistance, rigidity and elongation at break, so far there has not been available a resin composition insuring a balanced assortment of physical characteristics.

### SUMMARY OF THE INVENTION

The present invention has been made to provide a resin composition which meets the multiple performance requirements which cannot be met with the conventional resin compositions. The object of the invention is to provide a resin composition which is easily moldable to provide moldings improved in flame retardance, heat distortion resistance, impact resistance, resistance to chemicals and weather resistance.

The inventors of the present invention found after much research that the above object can be neatly accomplished by formulating a polycarbonate, a thermoplastic polyester and a halogenated phenoxy resin, with or without an impact modifier and an antimony compound, in certain proportions. The present invention is the result of the above research and finding.

The present invention is, therefore, directed to a flame retarded polyester resin composition comprising
(A) 10 to 90% (by weight; the same applies hereinafter) of a polycarbonate having a viscosity average molecular weight of 10,000 to 60,000,
(B) 10 to 90% of a thermoplastic polyester,
(C) 0 to 40% of an impact modifier,
(D) based on 100 parts (by weight; the same applies hereinafter) of (A), (B) and (C) combined, 3.5 to 30 parts of a halogenated phenoxy resin having a weight average molecular weight of 5,000 to 200,000 and having a repeating skeletal unit of the general formula (I) 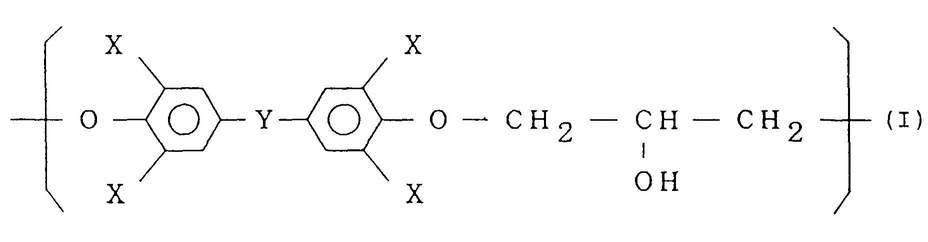 wherein X represents a bromine atom or a chlorine atom; Y represents an alkylene group containing 1 to 10 carbon atoms, an alkylidene group, a carbonyl group, -O-, -S- or -SO₂-, and
(E) based on 100 parts of (A), (B) and (C) combined, 0 to 30 parts of an antimony compound.

The polycarbonate constituting component (A) of the composition of the invention is a polycarbonate resin derived from a dihydric phenol, which is generally obtainable by reacting a dihydric phenol with phosgene or a carbonic acid diester.

The dihydric phenol is not limiting in kind but bisphenol A is particularly suitable from economic consideration.

The molecular weight, in terms of viscosity average molecular weight, of said polycarbonate resin is in the range of 10,000 to 60,000. If the molecular weight of the polycarbonate used is less than 10,000, there may not be obtained sufficient impact resistance and chemical resistance, while the use of a polycarbonate with a molecular weight exceeding 60,000 tends to detract from the moldability of the composition.

The proportion of the polycarbonate in the present invention is 10 to 90%, preferably 20 to 80% and more desirably 30 to 70% based on the total weight of components (A) through (C). If the proportion is less than 10%, impact resistance, heat distortion resistance, dimensional stability and frame retardance are sacrificed. On the other hand, the use of more than 90% of the polycarbonate results in decreases in chemical resistance and moldability.

The thermoplastic polyester resin (B) to be used in the present invention is a homopolymer or copolymer obtainable by reacting an aromatic dicarboxylic acid or an ester-forming derivative thereof with a diol or an ester-forming derivative thereof.

The solution viscosity of this thermoplastic polyester resin, as determined as a logarithmic viscosity number (IV) at a concentration of 0.5 g /dl in phenol-tetrachloroethane (1:1, w/w) at 25°C, is preferably in the range of 0.3 to 2.0. If the logarithmic viscosity number is less than 0.3, the impact resistance and chemical resistance of moldings tend to be sacrificed, while an IV in excess of 2.0 tends to detract from moldability.

As preferred examples of said thermoplastic polyester resin, there may be mentioned polyethylene terephthalate, polypropylene terephthalate, polytetramethylene terephthalate and polycyclohexanedimethylene terephthalate. Particularly preferred are polyethylene terephthalate and polytetramethylene terephthalate.

The proportion of the thermoplastic polyester in the present invention is 10 to 90%, preferably 20 to 80% and more desirably 30 to 70% based on the sum of components (A) through (C). If the proportion is less than 10%, chemical resistance and moldability are sacrificed. On the other hand, the use of this component in a proportion exceeding 90% leads to decreases in impact resistance, heat distortion resistance, dimensional stability and flame retardance.

If necessary, an impact modifier (Component C) can be incorporated in the resin composition of the invention.

As examples of said impact modifier which is optionally employed in the practice of the invention, there may be mentioned olefinic polymers, core/shell graft polymers, polyester elastomers and so on, but these are not exclusive choices.

The polyolefin mentioned above is not particularly critical in regard of the degree of polymerization but generally one having a melt index within the range of 0.05 to 50 g/10 minutes can be selectively employed.

As specific examples of said polyolefin, there can be mentioned homo- and copolymers such as linear low density polyethylene, low density polyethylene, high density polyethylene, polypropylene, ethylene-propylene copolymer, ethylene-propylene-diene terpolymer and so on.

The core/shell graft polymers mentioned above can be obtained by graft-polymerizing a vinyl compound with a rubber-like elastomer.

The rubber-like elastomer which can be used in the production of said core/shell graft polymer is preferably an elastomer having a glass transition temperature of not higher than 0°C and more preferably not higher than -40°C.

As specific examples of such rubber-like elastomer, there may be mentioned diene rubbers such as polybutadiene, butadiene-styrene copolymer, butadiene-butyl acrylate copolymer, etc., polyacrylate rubbers such as polybutyl acrylate, poly(2-ethylhexyl acrylate), etc., olefin rubbers such as ethylene-propylene copolymer, ethylene-propylene-diene terpolymer and so on. From weather resistance and impact resistance points of view, the use of a butadiene-butyl acrylate copolymer is advantageous.

The proportion of said butyl acrylate in said butadiene-butyl acrylate is preferably 50 to 70%. If the butyl acrylate content of the copolymer is less than 50%, no sufficient weather resistance will be obtained, while a butyl acrylate content over 70% tends to detract from impact resistance, particularly low-temperature impact resistance. The average particle size and gel content of the rubber-like elastomer are not particularly limiting but the preferred average particle size is 0.05 to 2.0 µm and the preferred gel content is 10 to 90%.

The vinyl compound which can be used in the production of said core/shell graft polymer includes aromatic vinyl compounds, vinyl cyanides, acrylic esters, methacrylic esters and so on. These monomers can be used singly or in combination.

As preferred examples, styrene may be mentioned for said aromatic vinyl compound, acrylonitrile for said vinyl cyanide, butyl acrylate for said acrylic ester, and methyl methacrylate for said methacrylic ester.

The ratio of said rubber-like elastomer to said vinyl compound may range from 10/90 through 90/10 and is preferably in the range of 30/70 through 80/20. If the ratio is less than 10/90, the impact resistance of moldings tends to decrease, while a ratio in excess of 90/10 tends to result in inadequate improvement in impact resistance.

The polyester elastomers mentioned above are preferably copolymers each comprising an aromatic dicarboxylic acid or an ester-forming derivative thereof, a diol or an ester-forming derivative thereof and a polyether having a number average molecular weight of 700 to 3,000, with the unit derived from said polyether therein accounting for 5 to 70%. If the proportion of the polyether-derived unit is less than 5%, the improving effect on impact resistance tends to be not appreciable, while any proportion over 70% tends to detract from heat resistance.

The solution viscosity, in terms of the logarithmic viscosity number (IV) as determined at a concentration of 0.5 g/dl in phenol-tetrachloroethane (1:1, w/w) at 25°C, of the aforesaid polyester elastomer preferably ranges from 0.3 to 2.0. If the logarithmic viscosity number is less than 0.3, the impact resistance and chemical resistance of moldings tend to be insufficient, while moldability tends to deteriorate when the viscosity number exceeds 2.0.

As specific examples of said aromatic dicarboxylic acid or ester-forming derivative thereof to be employed in the production of said polyester elastomer, there may be mentioned terephthalic acid, isophthalic acid and their ester-forming derivatives, by way of example.

The diol or ester-forming derivative thereof includes, among others, ethylene glycol, propylene glycol, tetramethylene glycol and their ester-forming derivatives.

As examples of said polyether, there may be mentioned the polyethers mentioned in Japanese Kokai Patent Publication No. 2-92953, namely polyethylene glycol, polypropylene glycol, polytetramethylene glycol, ethylene oxide-propylene oxide copolymer, and bisphenol A-modified polyethylene glycol which is obtainable by reacting ethylene oxide with 2,2-bis(p-hydroxyphenyl)propane (bisphenol A), among others.

As mentioned hereinbefore, the number average molecular weight of said polyether is preferably in the range of 700 to 3,000, more preferably 800 to 2,000. If the molecular weight is less than 700, heat resistance, impact resistance and heat distortion resistance will be sacrificed and if it exceeds 3,000, thermal stability tends to be adversely affected.

The proportion of said impact modifier is 0 to 40%, preferably 1 to 20%, based on the sum of (A) through (C). If the proportion exceeds 40%, rigidity and heat distortion resistance are sacrificed.

The halogenated phenoxy resin constituting component (D) of the invention is a flame retardant component and has a repeating skeletal unit of the general formula (I) 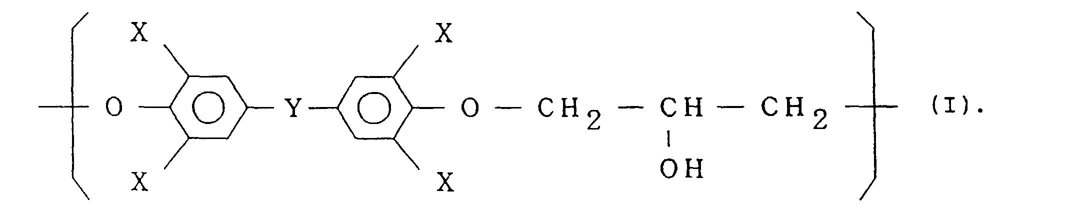 While this resin is a generally glycidyl- and/or hydroxy-terminated resin, these terminal groups may be blocked with a carboxylic acid, a phenol, an amine or an alcohol.

Referring to the above general formula (I), X represents bromine or chlorine and Y represents a C₁₋₁₀ alkylene group, an alkylidene group, a carbonyl group, -O-, -S- or -SO₂-.

The halogenated phenoxy resin of general formula (I) can be produced inter alia by reacting a halogenated bisphenol glycidyl ether with a halogenated bisphenol in the presence of an appropriate catalyst, if necessary in a solvent.

As examples of the halogenated bisphenol compound, there may be mentioned 2,2-bis(3,5-dibromo-4-hydroxyphenyl)propane, bis(3,5-dibromo-4-hydroxyphenyl)phenylmethane, 1,1-bis(3,5-dibromo-4-hydroxyphenyl)ethane, bis(3,5-dibromo-4-hydroxyphenyl)sulfone, bis(3,5-dibromo-4-hydroxyphenyl)ether, bis(3,5-dibromo-4-hydroxyphenyl)ketone, bis(3,5-dibromo-4-hydroxyphenyl)sulfide, 2,2-bis(3,5-dichloro-4-hydroxyphenyl)propane, bis(3,5-dichloro-4-hydroxyphenyl)methane, bis(3,5-dichloro-4-hydroxyphenyl)sulfone, bis(3,5-dichloro-4-hydroxyphenyl)sulfide and so on. Among these compounds, 2,2-bis(3,5-dibromo-4-hydroxyphenyl)propane, which is commonly called tetrabromobisphenol A, is preferred from the standpoint of flame retardance.

In addition, together with the halogenated bisphenol, ordinary non-halogenated bisphenol compounds such as 2,2-bis(4-hydroxyphenyl)propane, bis(4-hydroxyphenyl)sulfone, bis(4-hydroxyphenyl)methane can be used within the range not exceeding 30 mole % based on the total bisphenol compound.

The weight average molecular weight of said halogenated phenoxy resin is 5,000 to 200,000, preferably 10,000 to 200,000, and still more desirably 20,000 to 100,000. When the molecular weight is less than 5,000, there will be the tendency that the residence stability at molding is lowered, the problem of bleedout occurs or the evolution of gases is increased. On the other hand, when the weight average molecular weight exceeds 200,000, the flow at molding and the mechanical properties of moldings tend to be adversely affected.

In the composition of the present invention, the proportion of said halogenated phenoxy resin is 3.5 to 30 parts based on 100 parts of components (A), (B) and (C) combined, preferably 6 to 20 parts on the same basis. No sufficient flame retardant effect may be obtained if the proportion of this resin is less than 1 part, while the impact resistance and heat resistance are sacrificed when the limit of 50 parts is exceeded.

In the resin composition of the present invention, there may be incorporated an antimony compound [component (E)]. The antimony compound is an auxiliary flame retardant and the use of it in combination with said halogenated phenoxy resin results in a synergistic improvement in flame retardance.

The antimony compound which can be used for this purpose includes, among others, antimony oxides such as antimony trioxide, antimony pentoxide, etc., antimony phosphate, sodium antimonate and so on.

In the composition of the present invention, the proportion of said antimony compound is 0 to 30 parts, preferably 0.1 to 20 parts, based on 100 parts of components (A), (B) and (C) combined. When the proportion exceeds 30 parts, impact resistance is sacrificed.

The ratio of said components (D) and (E) is not critical but the (D)/(E) ratio of 2/1 through 20/1 (w/w) is preferred from the standpoint of flame retardance.

The resin composition of the present invention may further contain phosphite or phenolic stabilizers, light stabilizers, plasticizers, lubricants, parting agents, ultraviolet absorbers, antistatic agents, dyes, pigments and fillers such as glass fiber, talc, mica and so on.

The resin composition of the present invention can be manufactured by any suitable technique. For example, it can be manufactured by blending with the aid of a blender, supermixer or the like or using a single-screw or multi-screw extruder.

Such blending can be effected by mixing components (A), (B), (C) if used, (D), and (E) if used, all together in one operation or mixing some of them first, adding the remainder, and blending all together.

The resulting resin composition of the present invention can be easily molded by the known techniques such as injecting molding, extrusion and so on, and provides automotive parts, electrical or electronic parts, general articles, etc. which are flame retardant and excellent in heat distortion resistance, impact resistance, chemical resistance and weather resistance.

Thus, the resin composition of the present invention is very satisfactory in moldability and can be molded into a variety of shaped articles with excellent impact resistance, heat distortion resistance, flexural modulus, weather resistance and chemical resistance as well as flame retardant property.

### DETAILED DESCRIPTION OF THE PREFERRED EMBODIMENTS

The following examples and comparative examples are further illustrative of the resin composition of the invention.

### Examples 1 through 8 and Comparative Examples 1 through 5

The following dried components (A) through (E) and, as a stabilizer, PEP-36 (manufactured by Adeka-Argus Co.) were preliminarily blended in the proportions indicated in Table 1 and the resulting blend was pelletized by means of a twin-screw extruder at 270°C. Using an injection molder, the pellets were molded into testpieces at 240-280°C. These testpieces were evaluated for various characteristics. The results are presented in Table 1.
(A) Polycarbonate
   Panlite L-1250 (viscosity average molecular weight ca. 25,000, manufactured by Teijin Kasei Co., Ltd.)
(B) Polyethylene terephthalate resin
   EFG-85A (IV 0.85, manufactured by Kanebo, LTD.)
(C) Impact modifier
   C-1: FW-20G (linear low-density polyethylene, manufactured by Mitsubishi Kasei Corporation)
   C-2: A core/shell graft polymer prepared by emulsion-copolymerizing 40 parts of a rubber-like elastomer composed of 67% butyl acrylate and 33% butadiene and having a mean particle diameter of 0.15 µm with 60 parts of a mixture of 20% acrylonitrile, 30% methyl methacrylate and 50% styrene.
   C-3: A core/shell graft polymer prepared by emulsion-copolymerizing 60 parts of a rubber-like elastomer composed of 64% butyl acrylate and 36% butadiene and having a mean particle diameter of 0.15 µm with 40 parts of a mixture of 15% acrylonitrile, 30% methyl methacrylate and 55% styrene.
   C-4: A thermoplastic polyester elastomer (IV=0.70) comprising 40% of the unit derived from dimethyl terephthalate and ethylene glycol and 60% of the unit derived from a bisphenol A-modified polyethylene glycol having a number average molecular weight of 1,000 as manufactured by the process (ester interchange in the presence of a catalyst) described in Japanese Kokai Patent Publication No. 2-92953.
(D) Halogenated phenoxy resin
   YPB-43 M (brominated phenoxy resin, weight average molecular weight 60,000, bromine content 53%, manufactured by Tohto Kasei Co., Ltd.)
(E) Antimony compound
   PATOX-C (antimony trioxide, The Nihon Mining & Concentrating Co., Ltd.)

### Impact resistance

Using 1/4"-thick notched specimens, Izod impact values were measured in accordance with ASTM D-256.

### Heat distortion resistance

Determined using 1/4"-thick specimens at a load of 4.6 kg/cm² in accordance with ASTM D-648

### Tensile strength

Determined using an ASTM-No. 1 dumbbell in accordance with ASTM D-638

### Elongation at break

Determined using an ASTM-No. 1 dumbbell in accordance with ASTM D-638

### Flexural modulus

Determined using 1/4"-thick specimens in accordance with ASTM D-790

### Flame retardant property

Evaluated using 1/32"-thick specimens in accordance with UL-94

### Appearance of product

Box-shaped moldings each weighing about 100 g as molded with a 5 oz. injection molding machine at a cylinder temperature of 280°C and a mold temperature of 70°C were grossly inspected and evaluated according to the following criteria.
- ο:: homogeneous; flow mark, silver streak, burn and curling are absent.
- Δ:: Not homogeneous; flow mark, silver streak, burn and curling are observed.
- x:: Not homogeneous; flow mark, silver streak, burn and curling are remarkable.

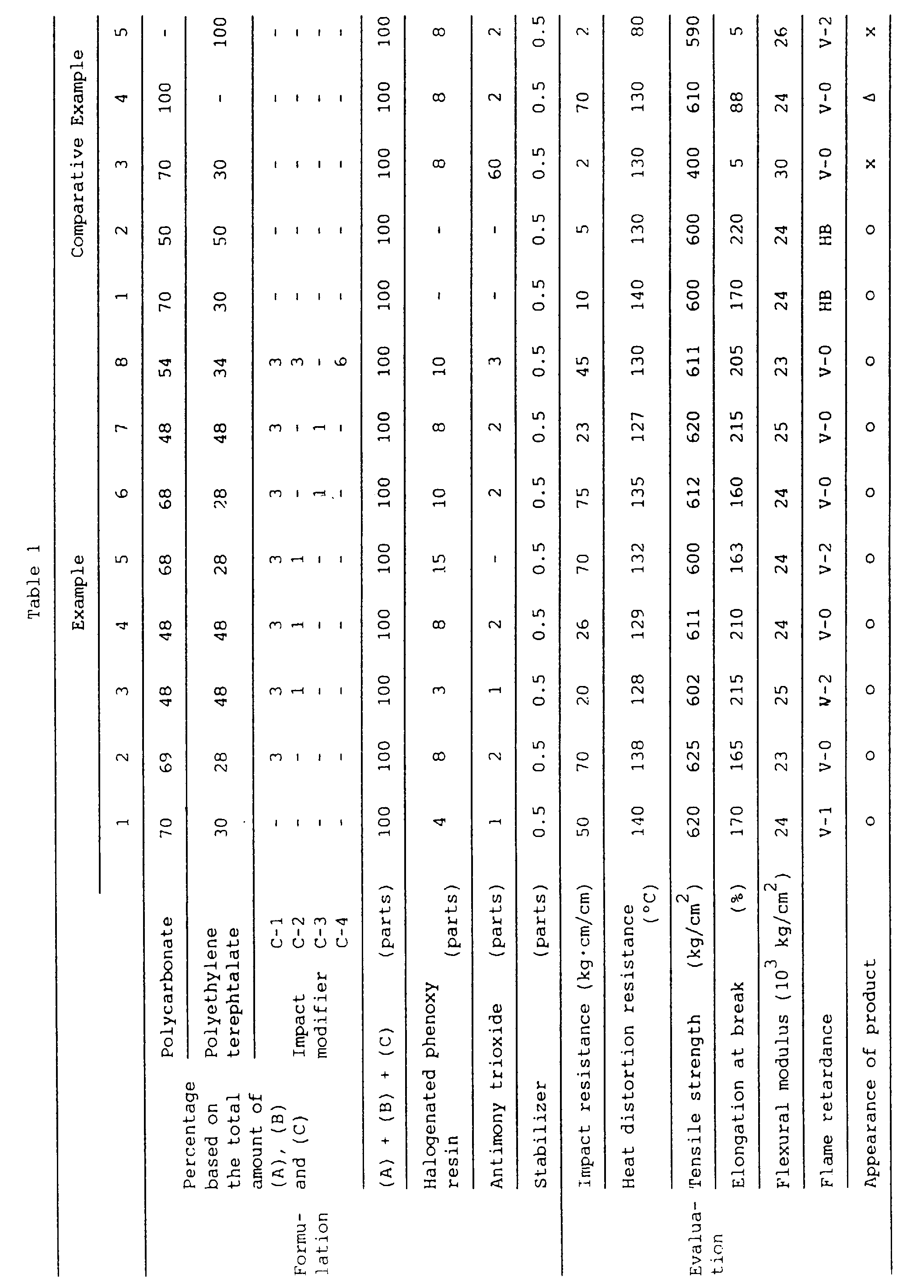

## Claims

1. A flame retarded polyester compositions comprising
(A) 10 to 90% (by weight; the same applies hereinafter) of a polycarbonate having a viscosity average molecular weight of 10,000 to 60,000,
(B) 10 to 90% of a thermoplastic polyester,
(C) 0 to 40 % of an impact modifier,
(D) based on 100 parts (by weight; the same applies hereinafter) of (A), (B) and (C) combined, 3.5 to 30 parts of a halogenated phenoxy resin having a weight average molecular weight of 5,000 to 200,000 and having a repeating skeletal unit of the general formula (I) 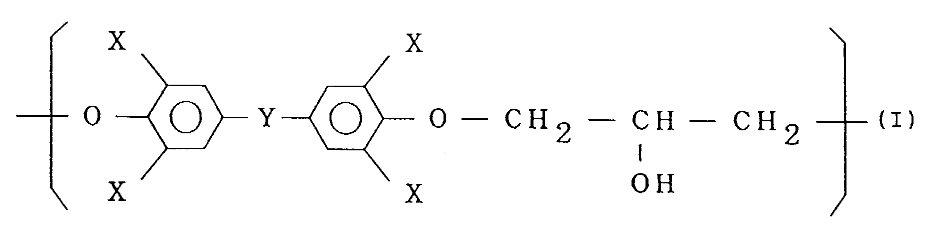 wherein X represents a bromine atom or a chlorine atom; Y represents an alkylene group containing 1 to 10 carbon atoms, an alkylidene group, a carbonyl group, -O-, -S- or -SO₂-, and
(E) based on 100 parts of (A), (B) and (C) combined, 0 to 30 parts of an antimony compound.

2. A resin composition according to claim 1 wherein said thermoplastic polyester is polyethylene terephthalate or polytetramethylene terephthalate.

3. A resin composition according to claim 1 wherein said impact modifier is at least one member selected from the group consisting of polyolefins, core/shell graft copolymers and polyester elastomers.

4. A resin composition according to claim 1 wherein the proportion of said antimony compound is 0.1 to 20 parts.

## Patentansprüche

1. Flammhemmende Polyesterzusammensetzungen, enthaltend
(A) 10 bis 90 % (Gew.-%, das gleiche gilt auch für die späteren Angaben) eines Polycarbonats mit einem durch die Viskosität bestimmten durchschnittlichen Molekulargewicht von 10 000 bis 60 000,
(B) 10 bis 90 % eines thermoplastischen Polyesters,
(C) 0 bis 40 % eines Modifiziermittels für die Schlagfestigkeit,
(D) 3,5 bis 30 Teile, bezogen auf 100 Teile (Gew.-Teile, das gleiche gilt auch für spätere Angaben) der Kombination von (A), (B) und (C), eines halogenierten Phenoxyharzes mit einem Gewichtsmittel des Molekulargewichts von 5000 bis 200 000, das wiederkehrende Strukturketteneinheiten der allgemeinen Formel (I) aufweist 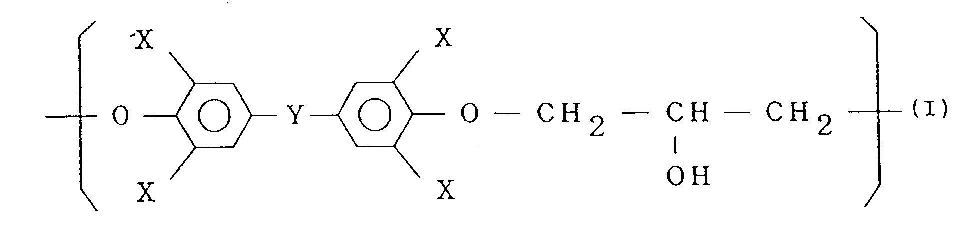 worin X ein Bromatom oder ein Chloratom bedeutet, Y eine Alkylengruppe mit 1 bis 10 Kohlenstoffatomen, eine Alkylidengruppe, eine Carbonylgruppe, -O-, -S- oder SO₂-, bedeutet, und
(E) 0 bis 30 Teile, bezogen auf 100 Teile der Kombination von (A), (B) und (C), einer Antimonverbindung.

2. Harzzusammensetzung nach Anspruch 1, wobei der thermoplastische Polyester Polyethylenterephthalat oder Polytetramethylenterephthalat ist.

3. Harzzusammensetzung nach Anspruch 1, wobei das Modifiziermittel für die Schlagfestigkeit mindestens ein aus der Gruppe der Polyolefine, Kern/Hülle-Pfropfcopolymeren und Polyester-Elastomeren gewähltes Mitglied ist.

4. Harzzusammensetzung nach Anspruch 1, wobei der Anteil der Antimonverbindung 0,1 bis 20 Teile beträgt.

## Revendications

1. Compositions de polyester ignifugées comprenant :
(A) 10 à 90% (en poids; idem pour ce qui suit) d'un polycarbonate ayant une masse moléculaire moyenne déterminée par viscosité de 10 000 à 60 000,
(B) 10 à 90% d'un polyester thermoplastique,
(C) 0 à 40% d'un agent modifiant la résistance au choc,
(D) pour 100 parties (en poids; idem pour ce qui suit) de (A), (B) et (C) combinés, 3,5 à 30 parties d'une résine phénoxy halogénée ayant une masse moléculaire moyenne en poids de 5 000 à 200 000 et ayant un motif de squelette de formule générale (I) : 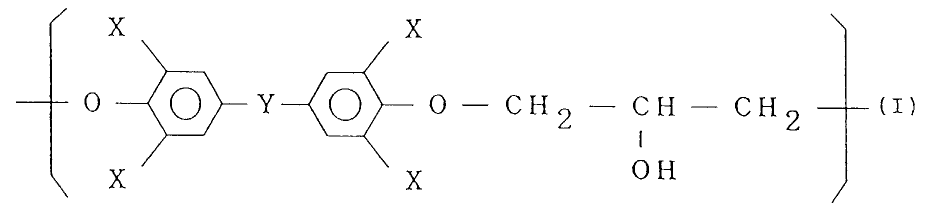 dans laquelle X représente un atome de brome ou un atome de chlore; Y représente un groupe alkylène contenant 1 à 10 atomes de carbone, un groupe alkylidène, un groupe carbonyle, -O-, -S- ou -SO₂-, et
(E) pour 100 parties de (A), (B) et (C) combinés, 0 à 30 parties d'un composé de l'antimoine.

2. Composition de résine selon la revendication 1 dans laquelle ledit polyester thermoplastique est le polyéthylène téréphtalate ou le polytétraméthylène téréphtalate.

3. Composition de résine selon la revendication 1 dans laquelle ledit agent modifiant la résistance au choc est au moins un composé choisi dans le groupe constitué par les polyoléfines, les copolymères greffés de structure noyau/enveloppe et les élastomères polyesters.

4. Composition de résine selon la revendication 1 dans laquelle la proportion dudit composé de l'antimoine est de 0,1 à 20 parties.
